# FASCICULE DE BREVET EUROPEEN

(11) **EP 2 331 009 B1**
(45) Date de publication et mention de la délivrance du brevet: **26.04.2017**
(21) Numéro de dépôt: 09787184.2
(22) Date de dépôt: 11.09.2009
(51) Int. Cl.: A61C 13/00

(54) **BLOC CERAMIQUE COMPOSITE**
KOMPOSIT-KERAMIKBLOCK
COMPOSITE CERAMIC BLOCK

(30) Priorité: 12.09.2008 FR 0856164
(43) Date de publication de la demande: 15.06.2011
(73) Titulaire: Sadoun, Michael, 75005 Paris (FR)
(72) Inventeur: Sadoun, Michael, 75005 Paris (FR)
(74) Mandataire: Nony
(86) Numéro de dépôt international: PCT/IB2009/053993
(87) Numéro de publication internationale: WO 2010/029515

(56) Documents cités:
- WO-A-00/40206
- WO-A1-2005/042623
- CH-A- 511 599
- GB-A- 911 549
- US-B1- 6 203 911
- US-B1- 6 271 282

## Description

### Domaine technique

L'invention se rapporte à un procédé de fabrication d'un bloc composite destiné à la fabrication d'une prothèse dentaire et à un procédé de fabrication d'une prothèse dentaire. L'invention concerne également un bloc composite et une prothèse dentaire obtenus ou susceptibles d'avoir été obtenus par de tels procédés.

### État de la technique

On connaît des blocs composites comportant un support poreux, généralement en matière céramique frittée, et une résine remplissant, au moins partiellement, les interstices du support.

Pour fabriquer un tel bloc composite, de la résine à l'état liquide est infiltrée dans les pores accessibles, ou « ouverts », du support, généralement par capillarité. Après durcissement de la résine, le bloc composite obtenu est usiné à la forme définitive souhaitée, classiquement par « conception et usinage assistés par ordinateur » ou CAD-CAM (« Computer Aided Design - Computer Aided Machining »).

Des procédés de fabrication de blocs composites sont notamment décrits dans les documents suivants: US 5,869,548, US 5,843,348, US 5,250,352, EP 0 241 384, WO93/07846, EP 2 725 358, EP 0 240 643, FR 2 904 306, EP 0 701 808 ou US 7,294,392.

WO 2005/042623 décrit un procédé pour préparer un extrudat.

La demande GB 911549 décrit un procédé de fabrication d'une prothèse dentaire composite dans lequel une résine est introduite dans un support poreux. La résine et son support sont ensuite moulés et durcis sous une pression destinée à compenser les effets de rétraction de la résine.

La demande CH 511599 se rapporte à un procédé de fabrication d'une prothèse dentaire composée d'un support moulé poreux de porcelaine dentaire rempli d'une résine durcissante. Un agent liant organo-silicique susceptible de réagir avec la porcelaine dentaire et la résine est introduit dans le support poreux afin de limiter la rétraction de la résine pendant son durcissement.

La demande WO 00/40206 décrit une prothèse dentaire composée d'un support poreux dans lequel est introduit une résine durcissable, l'ensemble support-résine étant fabriqué sous des conditions de pression et de température qui minimisent les effets de rétraction de la résine.

US 6 203 911 décrit une composition polymère moulable.

US 6 271 282 décrit un matériau de restauration dentaire. Il indique qu'une couche de verre peut présenter une dureté Knoop comprise entre environ 300 et 600 KHN.

Les blocs composites fabriqués selon les procédés actuels présentent cependant une résistance mécanique insuffisante. En particulier, la résine a tendance à se désolidariser du support. Jusqu'à ce jour, cette faible résistance mécanique a empêché l'exploitation commerciale de ces blocs composites pour fabriquer des prothèses dentaires.

Un but de l'invention est de fournir un nouveau procédé permettant d'améliorer les propriétés des blocs composites, notamment en augmentant leur résistance mécanique.

### Résumé de l'invention

Selon l'invention, on atteint ce but au moyen d'un procédé de fabrication d'un bloc composite destiné à la fabrication d'une prothèse dentaire, ce procédé comportant les étapes suivantes :
a) infiltration d'un support poreux au moyen d'une résine à l'état liquide ;
b) durcissement de la résine à l'état liquide imprégnant le support.

Ce procédé est remarquable que, à l'étape b), la résine est soumise à une pression supérieure à 300 bar.

Comme on le verra plus en détail dans la suite de la description, un procédé selon l'invention permet de fabriquer des blocs composites présentant une résistance mécanique augmentée.

Sans être liés par cette théorie, l'inventeur explique les performances obtenues par le fait que l'application de la pression, permettrait, au delà de la seule compensation de la rétraction éventuelle de la résine pendant son durcissement, de mettre en compression la résine à l'état solide, c'est-à-dire de créer une précontrainte augmentant la résistance mécanique.

De préférence, on fait pénétrer et durcir dans le support un volume de résine à l'état liquide V_{L} supérieur d'au moins 2 %, de préférence d'au moins 5 %, de préférence d'au moins 10 %, voire d'au moins 15 %, au volume V_{P} des pores ouvertes du support, les volumes V_{L} et V_{P} étant mesurés à une température de 20 °C, et sous une pression de 1 bar.

La résine à l'état liquide infiltrée peut en particulier être soumise à une pression supérieure à 400 bar, de préférence supérieure à 500 bar, supérieure à 1000 bar, supérieure à 2000 bar, supérieure à 3000 bar, supérieure à 4000 bar, voire supérieure à 5000 bar. Ces hautes pressions augmentent les masses volumiques de la résine à l'état liquide et du matériau constituant le support. Cependant, la compressibilité de la résine à l'état liquide est supérieure à celle du matériau constituant le support. La quantité de résine à l'état liquide qu'il est possible d'infiltrer, par unité de volume des pores ouverts, est donc supérieure à celle qu'il serait possible d'infiltrer en n'appliquant que des pressions plus faibles, et en particulier à la pression atmosphérique. Dans la suite de la description, sauf indication contraire, on désigne par « pression » la haute pression mentionnée ci-dessus. Par défaut, la « pression » ne désigne donc pas la « pression atmosphérique ».

La pression doit être exercée sur la résine infiltrée dans le support tandis qu'elle est encore à l'état liquide et jusqu'à ce qu'elle ait, au moins partiellement durci. De préférence, la totalité de la résine à l'état liquide imprégnant le support est durcie avant retour à la pression atmosphérique. De préférence, la pression est maintenue sensiblement constante jusqu'à ce que la totalité de la résine infiltrée ait durci.

La pression peut également être exercée pendant tout ou partie de la phase d'infiltration, ce qui, avantageusement, facilite la pénétration de la résine à l'état liquide, et autorise donc l'utilisation de résines plus visqueuses.

De préférence, la pression est exercée de manière isostatique, ou "uniaxiale". Tous les procédés connus de mise sous pression peuvent être utilisés.

Alternativement à la mise sous pression décrite ci-dessus ou, de préférence, en complément à cette mise sous pression, on poursuit l'infiltration de résine à l'état liquide, le cas échéant sous pression, pendant le durcissement de la résine déjà infiltrée et, de préférence encore, on contrôle ce durcissement de manière qu'il s'effectue depuis l'intérieur du support vers sa périphérie. Avantageusement, la résine durcie ne s'oppose donc pas à la pénétration de résine à l'état liquide supplémentaire au sein du support. Il est ainsi possible de compenser la rétraction de la résine lors de son durcissement, et au-delà de mettre en compression la résine à l'état solide.

Pour contrôler le durcissement, il est notamment possible d'agir sur un ou plusieurs des paramètres suivants :
- la concentration d'accélérateur et/ou de catalyseur dans la résine à l'état liquide ;
- la température et la durée de maintien à cette température :
- la nature chimique de la résine.

De préférence, les conditions optimales, et en particulier la pression éventuellement mise en oeuvre à l'étape b) et éventuellement à l'étape a), sont déterminées, en fonction de la résine et du support., par des mesures de l'homogénéité de la microdureté, de la résistance mécanique et des propriétés optiques.

De préférence, le support est conformé de manière que le bloc composite puisse être usiné par un dispositif CAD-CAM, notamment par un dispositif d'usinage tel que le système CELAY ® de la société Mikrona ou CEREC 3 de la société SIRONA. Le cas échéant, le support peut intégrer un ou plusieurs organes permettant son maintien par de tels dispositifs.

Le support peut présenter la forme générale d'une prothèse de dent.

L'invention n'est pas limitée par la nature chimique ou la forme générale du support, pourvu qu'il soit poreux et comporte des pores ouverts interconnectés, y compris dans sa masse.

De préférence, le support présente, avant infiltration, une porosité ouverte supérieure à 15%, mesurée selon la norme ISO 5017.

De préférence encore, le support présente une porosité ouverte comprise entre 25% et 50 %. Le plus grand diamètre des pores ouverts est de préférence compris entre 0,2 micron et 2 microns. Des supports appropriés sont par exemple commercialisés par la société VITA ZAHNFABRIK.

Le support peut présenter la forme d'une dent.

Le support peut être en un matériau céramique poreux.Le support est de préférence en un matériau fritté, de préférence choisi parmi un oxyde métallique sous forme de vitrocéramique, de verre, ou de céramique cristalline telle que le quartz, l'alumine ou la mullite.

De préférence encore, avant imprégnation, le support présente une densité supérieure à 60 % et/ou inférieure à 90 %.

Dans un mode de réalisation particulier, le support résulte d'un frittage à une température comprise entre 1100 et 1400 °C, pendant une durée comprise entre 2 et 10 heures, d'une préforme à base d'alumine. La rampe de montée en température peut être, par exemple, comprise entre 60°C et 300°C/heure.

La résine peut être un monomère ou un mélange de monomère. De préférence, la résine à l'état liquide ne composte qu'un mélange de monomère et un catalyseur.

De préférence, la résine est chemo-polymérisable, thermopolymérisable, ou thermoplastique.

La résine peut être en particulier choisie parmi les résines polymérisables décrites dans US 5,869,548, US 5,843,348 et EP 0 701 808.

De préférence, la résine est choisie dans la liste suivante :
- une résine monomère chemopolymérisable ou thermopolymérisable, de préférence une résine vinylester ou acrylique. La résine peut en particulier être choisie dans le groupe formé par le 2-Hydroxyethyl methacrylate, CAS 868-77-9 (HEMA), le Tetraethylene glycol dimethacrylate CAS 109-17-1 (TEGDMA), le 2,2-bis-(4-(2-hydroxy-3-méthacryloyloxy-propoxy)phenyl)propane, CAS 1565-94-2 (BIS-GMA), l'urethane dimethacrylate 1,6-bis(methacryloxy-2ethoxycarbonylamino)-2,4,4-trimethylhexane, (UDMA) CAS 72869-86-4, l'éthylène-glycol-diméthacrylate (EGDMA), le diéthylène-glycol-diméthacrylate (DEGDMA), le Bisphenol A-dimethacrylate, CAS 109-17-1 (BADMA) ;
- une résine thermoplastique, en particulier choisie parmi les polyesters saturés, et notamment le Polyethylene Terephtalate (PET) et le Poly(1.4-butylene terephtalate), CAS 24968-12-5 (PBT), les Polycarbonates Poly(bisphenol A carbonate), CAS 25037-45-0 (PC), le bisphénol A-carbonate, et les polyamides.

La nature de la résine n'est pas limitative.

Dans un mode de réalisation préféré, la résine à l'état liquide ne composte pas de particules présentant une taille supérieure à 0,1 mm, supérieure à 0,5 mm, ou supérieure à 1 mm.

Dans un mode de réalisation, la résine à l'état liquide ne comporte pas de pigment (particule de taille nanométrique), voire pas de particules solide.

Pour faciliter la pénétration de la résine à l'état liquide, il est en effet préférable qu'elle présente une viscosité faible. En particulier, elle ne devrait pas présenter une nature pâteuse.

Pour catalyser les matériaux d'imprégnation chemopolymérisables, il est possible d'utiliser des peroxydes, et en particulier le Dibenzoylperoxyd, CAS 94-36-0, le Methyl Ethyl Ketone Peroxides, CAS 1338-23-4, le Di-tert-amyl peroxide, CAS 10508-09-5, le Di-tert.-butylperoxide, CAS 110-05-4, ou le Cumene Hydroperoxide, CAS 80-15-9.

Pour accélérer le durcissement avec du Dibenzoylperoxyd, CAS 94-36-0, il est possible d'utiliser de la diméthyl-aniline (DMA), de la diéthyl-aniline (DEA) ou de la diméthyl-para-toluidine (DMPT). Pour accélérer le durcissement avec du Methyl Ethyl Ketone Peroxides, CAS 1338-23-4, il est possible d'utiliser, en particulier du Cobalt (II) 2-ethylhexanoate.

Le cas échéant, le bloc composite est soumis à un traitement thermique adapté pour parfaire la polymérisation, par exemple de 100°C pendant une heure.

Après durcissement de la résine, on obtient un bloc composite dont la dureté peut dépasser 140 Vickers, ce qui est largement supérieur à la dureté des blocs composites actuels, d'environ 60 Vickers.

L'invention concerne également un procédé de fabrication d'une prothèse dentaire comprenant une opération d'usinage d'un bloc composite fabriqué suivant un procédé conforme à l'invention. Le support est ainsi usiné jusqu'à sa forme définitive après incorporation de la résine.

L'invention concerne également un bloc composite et une prothèse dentaire fabriqués ou pouvant être fabriqués suivant un procédé conforme à l'invention.

De préférence, un bloc composite selon l'invention présente une dureté supérieure à 100 Vickers., de préférence supérieure à 120 Vickers, voire supérieure à 140 Vickers.

De préférence, un bloc composite selon l'invention présente un module élastique de Young supérieur à 25 GPa, mesuré suivant la norme ISO 10 477 et/ou un module en flexion trois points supérieur à 120 MPa, mesuré suivant la norme ISO 6 872.

### Définitions

Par « prothèse dentaire », on entend de manière générale toute pièce destinée à être placée sur la denture d'un patient dans le but de la restaurer en totalité ou en partie dans sa forme naturelle.

C'est ainsi que les prothèses dentaires fabriquées selon l'invention peuvent être, par exemple, des chapes périphériques ou couronnes qui viennent se placer sur le moignon d'une dent naturelle, ou bien des prothèses généralement désignées sous les termes de « inlay » et « onlay » qui sont destinées à reconstituer une altération partielle d'une dent en remplissant la cavité résultant de la perte de substance de la dent par une pièce de même forme réalisée par le prothésiste, ou bien encore des bridges qui sont des prothèses qui prennent appui simultanément sur les parties subsistantes d'au moins deux dents en compensant éventuellement une ou plusieurs des dents manquantes.

En fonction de la nature de la prothèse dentaire fabriquée, un bloc composite selon l'invention peut être rendu solidaire d'autres pièces, par exemple d'une base métallique.

### Description détaillée

Selon la technique antérieure, une résine à l'état liquide vient remplir le volume poreux ouvert V_{P}(1) par capillarité, classiquement à pression ambiante. Le volume de résine à l'état liquide infiltrée dans le support, V_{L}(1), est donc sensiblement égal au volume poreux ouvert V_{P}(1) à pression ambiante.

En durcissant la résine se rétracte de sorte que le volume occupé par la résine à l'état solide V_{M}(1) est inférieur au volume poreux ouvert V_{P}(1). Par exemple, la rétraction résultant d'une polymérisation à température ambiante peut classiquement conduire à une diminution du volume occupé par la résine comprise entre 6 % et 15 % de son volume initial.

Il en résulte des contraintes élevées en traction à l'interface entre la résine et la surface du support définissant les pores, ce qui conduit à un décollement de la résine et donc à une réduction de la durée de vie de la prothèse dentaire, la rendant impropre à la commercialisation.

Selon l'invention, de préférence, on crée un vide dans le support avant le début de l'infiltration de la résine à l'état liquide. Ce vide correspond de préférence à une pression inférieure à 200 mbar, de préférence inférieure à 100 mbar. Avantageusement, le vide favorise la pénétration de la résine à l'état liquide.

L'infiltration de la résine à l'état liquide peut être effectuée à pression atmosphérique ou sous une pression supérieure à la pression atmosphérique. Une infiltration à pression atmosphérique est avantageusement simple à mettre en oeuvre, mais requiert l'utilisation d'une résine à l'état liquide de faible viscosité. Une infiltration sous une pression supérieure est également possible, et peut même être nécessaire si la résine à l'état liquide présente une viscosité trop élevée. Quelle que soit la pression à laquelle l'infiltration est effectuée, il est nécessaire, dans un mode de réalisation préféré de l'invention, de soumettre à une haute pression, supérieure à 300 bars, la résine à l'état liquide qui a pénétré dans le support., au moins jusqu'à ce qu'une partie, et de préférence la totalité, de cette résine ait durcie.

La différence de compressibilité entre les matériaux utilisés pour le support et pour la résine à l'état liquide permet avantageusement d'infiltrer un volume supplémentaire de résine à l'état liquide supérieur à celui qu'il est possible d'infiltrer à pression atmosphérique. En faisant durcir sous pression la résine à l'état liquide, il devient ainsi possible, après retour à la pression atmosphérique, de créer des précontraintes tendant à comprimer la résine. Il en résulte une résistance mécanique considérablement améliorée.

Par ailleurs, toujours selon un mode de réalisation préféré de l'invention, et notamment lorsque le durcissement est relativement lent, le durcissement de la résine est contrôlé de manière à s'effectuer depuis l'intérieur vers l'extérieur du support. Autrement dit, la résine déjà durcie ne s'oppose pas à l'infiltration de résine supplémentaire, ce qui permet de compenser la diminution du volume occupé par la résine infiltrée du fait de son durcissement.

La résine peut en particulier, être une résine chemopolymérisable, classiquement mélangée à un catalyseur et à un accélérateur, infiltrée par exemple avec une pression de 500 bar et à une température comprise entre 80°C et 100°C.

La résine peut également être une résine thermoplastique infiltrée par exemple sous une pression isostatique de 2500 bar, à 250°C, dans un support préalablement mis sous vide et chauffé à 250°C. La résine thermoplastique peut être également infiltrée, par exemple, à une pression de 3500 bars, à une température de 300°C, dans un support préalablement mis sous vide et chauffé à une température de 300°C.

Différentes méthodes sont possibles pour contrôler le durcissement en fonction de la résine utilisée.

Par exemple, lorsque la résine est chemo-polymérisable, il est possible d'y ajouter une quantité d'accélérateur variable. Au début de l'infiltration, par exemple, on peut infiltrer une résine comportant une quantité élevée d'accélérateur, puis, au fur et à mesure de l'infiltration, diminuer la concentration d'accélérateur la résine infiltrée.

La nature de la résine peut également être variable. Par exemple, il est possible, en début d'infiltration, d'infiltrer une première résine thermopolymérisable à une première température, puis d'infiltrer une deuxième résine thermopolymérisable à une deuxième température supérieure à la première température. Par exemple, l'infiltration peut commencer avec du peroxyde de benzoyle, polymérisable à 80°C, puis se poursuivre avec du di-t-butyl-1,2,1-peroxyde ou du di-t-amyl-1,4,2-peroxyde ou encore du comyl-1,8,8-peroxyde, polymérisables à 120 °C. Pour contrôler le durcissement, il suffit alors de chauffer le support à une température comprise entre 80 °C, et 120 °C, par exemple 90°C, afin de ne durcir que la première résine, au coeur du support, puis de chauffer ce support à plus de 120 °C, afin de durcir la deuxième résine à la périphérie. Une infiltration sous une pression d'environ 2000 bar est avantageuse.

En variante, il est possible d'infiltrer d'abord au coeur du support une résine chemopolymérisable, par exemple une première résine mélangée à un catalyseur et à un accélérateur, puis, à sa périphérie, une résine thermopolymérisable, par exemple une deuxième résine mélangée à un catalyseur. Le durcissement de la résine périphérique peut alors être effectué, par chauffage par exemple entre 80°C et 100°C, après durcissement de la résine disposée au coeur de du support. Une infiltration sous une pression d'environ 1500 bar est avantageuse.

Toute la résine infiltrée est de préférence durcie avant retour à la pression ambiante. Ce retour à la pression ambiante s'accompagne d'une expansion des volumes du support et de la résine à l'état solide.

A la différence des blocs fabriqués selon les techniques antérieurs, le bloc composite obtenu ne présente pas de contraintes mécaniques tendant à décoller la résine du support (contraintes de traction sur la résine). Au contraire, de préférence, le "survolume" de résine infiltrée et durci est déterminé, en fonction de la résine et du support, pour créer une précontrainte, c'est-à-dire une pression permanente entre résine à l'état solide et le support. Autrement dit, de préférence, la résine à l'état solide est comprimée par le support fritté. La résistance mécanique du bloc composite en est considérablement augmentée.

De plus, les propriétés optiques du bloc composite le rendent tout à fait adapté à une utilisation comme prothèse dentaire, après un éventuel usinage final.

Un procédé de fabrication d'une prothèse dentaire composite selon l'invention peut comprendre les étapes suivantes :
1) préparation d'un support poreux ;
2) optionnellement, rectification de la forme du support poreux ;
3) optionnellement, traitement de silanage à la surface des pores ouverts du support poreux ;
4) imprégnation du support poreux avec une résine à l'état liquide ;
5) durcissement de la résine à l'état liquide infiltrée dans le support poreux, optionnellement suivi d'un traitement thermique de consolidation ;
6) mise en forme finale.

À l'étape 1), les procédés de fabrication des supports poreux actuels, et notamment ceux décrits dans les documents cités ci-dessus, peuvent être utilisés. De préférence, le support poreux est tel que décrit ci-dessus.

Le traitement de silanage, à l'étape 3), est destiné à augmenter la mouillabilité de la surface des pores par la résine à l'état liquide, et en particulier destiné à rendre cette surface plus hydrophobe. De préférence, ce traitement de silanage comprend une silanisation au moyen d'alcoxysilane, d'halosilane, de préférence de 3-méthacryloxypropyltriméthoxysilane. Après application de l'agent de silanage, le support est séché, de préférence à une température comprise entre 100 °C et 200 °C, classiquement pendant plusieurs heures.

Le traitement de silanage peut par exemple être effectué conformément au procédé décrit dans US 5,869,548.

Les étapes 4) et 5) correspondent aux étapes a) et b) d'un procédé de fabrication d'un bloc composite selon l'invention, tel que décrit précédemment.

### Exemples

Les exemples suivants sont fournis à des fins illustratives et non limitatives.

### Exemple 1

Le support poreux résulte d'un frittage à 1050 °C, pendant 2 heures, d'une préforme formée à partir d'une poudre de verre aluminosilicate alcalin dont la taille des particules est comprise entre 5 et 20 microns. Après frittage, le support présente une densité de 60 %.

Le support poreux a subi successivement
- un traitement de silanage par une solution présentant la composition suivante, en pourcentages massiques :

| | |
|---|---|
| méthoxypropanol : | 93,8 % |
| eau : | 5 % |
| acide acétique : | 0,2 % |
| silane : | 1 % |

- un séchage à 150 °C pendant 4 heures ;
- une mise sous vide ;
- une infiltration d'une résine à une température de 20°C sous une pression de 500 bar, pendant 15 minutes, la composition massique de cette résine étant la suivante :

| | |
|---|---|
| BIS-GMA : | 60 % |
| TEGDMA : | 39,36 % |
| peroxyde de méthyléthylcétone : | 0,6 % |
| octoate de cobalt : | 0,04 % |

- un chauffage toujours sous une pression de 500 bar, pendant 2 heures à 60°C.

Dans la pratique, il est possible, après l'opération de silanage, de disposer la structure poreuse dans un moule en latex, d'y faire le vide, par exemple jusqu'à une pression d'environ 100 mbar, puis d'y introduire la résine à l'état liquide sous vide et de fermer le moule. Le moule ainsi fermé peut alors être introduit dans un pot ou dans un autoclave où il est progressivement soumis à la pression de 500 bars. La pression est alors maintenue jusqu'à l'équilibre. Le moule peut ensuite subir le chauffage de consolidation, avant refroidissement et retour à la pression atmosphérique.

### Exemple 2

Le support poreux résulte d'un frittage à 1150 °C, pendant 2 heures, d'une préforme formée à partir d'une poudre de vitrocéramique lithium di silicate dont la taille des particules est comprise entre 1 et 20 microns. Après frittage, le support présente une densité de 65 %.

Le support poreux a subi successivement
- un traitement de silanage et un séchage identiques à ceux de l'exemple 1 ;
- une mise sous vide ;
- une infiltration par capillarité d'une première résine à une température de 20°C sous une pression de 1 bar (à l'air libre), pendant 10 minutes, la composition massique de cette première résine étant la suivante :

| | |
|---|---|
| EBADMA | 99,12% |
| Ethoxylated-bisphenol A-dimethacrylate | |
| CAS 41637-38-1 | |
| Benzoyle peroxide : | 0,8 % |
| DMPT : | 0,08 % |

- une immersion dans une deuxième résine avec application d'une pression de 1000 bar à la surface de cette résine, pendant 20 minutes à une température de 20°C, la composition en poids de cette deuxième résine étant la suivante :

| | |
|---|---|
| UDMA: | 80 % |
| TEGDMA : | 19,192 % |
| Benzoyle peroxide : | 0,8 % |
| DMPT : | 0,04 % |

- une mise sous pression de 1000 bar, pendant 1 heure, puis
- un chauffage pendant 1 heure à 80°C :
- un refroidissement jusqu'à température ambiante ;
- une réduction de la pression jusqu'à pression ambiante.

### Exemple 3

Le support poreux résulte d'un frittage à 1100 °C, pendant 2 heures, d'une préforme formée à partir d'une poudre de verre aluminosilicate alcalin chargée de cristaux d'albite NaAlSi₃O₈, dont la taille des particules est d'environ 10 microns. Après frittage, le support présente une densité de 72 %.

Le support poreux a subi successivement
- un traitement de silanage et un séchage identiques à ceux de l'exemple 1 ;
- une mise sous vide ;
- une infiltration par capillarité d'une première résine chemopolymérisable, à une température de 20°C, sous une pression de 500 bar, pendant 15 minutes, la composition massique de cette première résine étant la suivante :

| | |
|---|---|
| UDMA: | 98,95 % |
| MEKP: | 1 % |
| Cobalt octoate: | 0,05 % |

- une immersion dans une deuxième résine thermopolymérisable, avec application d'une pression de 2000 bar, par l'intermédiaire d'eau, à la surface de cette résine, pendant 30 minutes à une température de 40°C, la composition en poids de cette deuxième résine étant la suivante :

| | |
|---|---|
| UDMA: | 98 % |
| MEKP: | 2 % |

- un chauffage toujours sous une pression de 2000 bar, pendant 2 heures à 100 °C ;
- un refroidissement jusqu'à température ambiante ;
- une réduction de la pression jusqu'à pression ambiante.

### Exemple 4

Le support poreux résulte d'un frittage à 1200°C, pendant 2 heures, d'une préforme formée à partir d'une poudre de céramique et de quartz SiO₂, dont la taille des particules est comprise entre 0,1 et 10 microns. Après frittage, le support présente une densité de 78 %.

Le support a subi successivement
- un traitement de silanage et un séchage identiques à ceux de l'exemple 1 ;
- une mise sous vide ;
- une infiltration par capillarité à une pression de 1 bar d'une première résine thermopolymérisable (mélange monomère), à une température de 40°C, la composition massique de cette première résine étant la suivante :

| | |
|---|---|
| EBADMA | 99 % |
| Ethoxylated-bisphenol A-dimethacrylate (CAS 41637-38-1) | |
| Benzoyle peroxyde: | 1 % |

- attente, à l'air libre, pendant 20 minutes,
- une immersion dans une deuxième résine thermopolymérisable, avec application d'une pression de 3000 bar à la surface de cette résine, pendant 15 minutes, la composition en poids de cette deuxième résine étant la suivante :

| | |
|---|---|
| BIS-GMA : | 80 % |
| TREGDMA : | 18 % |
| Di-T-BUTYLPEROXYDE : | 2 % |

- un chauffage toujours sous une pression de 5000 bar, pendant 1 heure à 90°C :
- un chauffage toujours sous une pression de 5000 bar, pendant 1 heure à 130°C :
- un refroidissement jusqu'à température ambiante ;
- une réduction de la pression jusqu'à pression ambiante.

### Exemple 5

Le support poreux résulte d'un frittage à 1500 °C, pendant 2 heures, d'une préforme formée à partir d'une poudre de mullite (3(Al₂O₃).2(SiO₂)), dont la taille des particules est comprise entre 0,1 et 10 microns. Après frittage, le support présente une densité de 76 %.

Le support a subi successivement
- une mise sous vide ;
- une mise en contact avec des granules de polymère de polyéthylène terephtalate amorphe,
- un chauffage à 250°C jusqu'au mouillage de toute la surface de la préforme avec le polymère à l'état liquide ;
- application d'une pression de 3000 bar, par l'intermédiaire de gaz (air ou air-argon), pendant 60 minutes, à une température de 250°C ;
- un refroidissement jusqu'à température ambiante ;
- une réduction de la pression jusqu'à pression ambiante.

### Exemple 6

Le support poreux résulte d'un frittage à 1300 °C, pendant 2 heures, d'une préforme formée à partir d'une poudre d'alumine (Al₂O₃), dont la taille des particules est comprise entre 0,1 et 30 microns. Après frittage, le support présente une densité de 84 %.

Le support a subi successivement
- une mise sous vide ;
- une mise en contact avec des granules de polycarbonate (bisphenol.A.carbonate),
- un chauffage à 300°C, sous vide, pendant 30 minutes, de manière à mouiller et enrober de toute la surface de la préforme avec le polycarbonate à l'état liquide :
- application d'une pression de 2000 bar, par l'intermédiaire de gaz (air ou air-argon), pendant 30 minutes, avec maintien de la température à 300°C ;
- un refroidissement jusqu'à température ambiante ;
- une réduction de la pression jusqu'à pression ambiante.

Bien entendu, l'invention n'est pas limitée aux modes de réalisation décrits et représentés. En particulier, l'infiltration de résine à l'état liquide peut être limitée à une région limitée du support, et en particulier être limitée à sa région périphérique.

Par « comportant un », il y a lieu de comprendre « comportant au moins un ».

## Revendications

1. Procédé de fabrication d'un bloc composite destiné à fabrication d'une prothèse dentaire, ledit procédé comportant les étapes suivantes :
a) infiltration d'un support en un matériau céramique poreux au moyen d'une résine à l'état liquide ;
b) durcissement de la résine à l'état liquide imprégnant le support ;
**caractérisé en ce que**, à l'étape b), la résine à l'état liquide est soumise à une pression supérieure à 300 bar, et **en ce qu'** on fait pénétrer et durcir dans le support un volume de résine à l'état liquide supérieur d'au moins de 2 % au volume des pores ouverts du support, lesdits volumes étant mesurés à une température de 20°C et sous une pression de 1 bar.

2. Procédé selon la revendication précédente, dans lequel ledit volume de résine à l'état liquide est supérieur d'au moins 10% audit volume des pores ouverts.

3. Procédé selon la revendication précédente, dans lequel ledit volume de résine à l'état liquide est supérieur d'au moins 15% audit volume des pores ouverts.

4. Procédé selon l'une quelconque des revendications précédentes, dans lequel ladite pression est supérieure à 2000 bar.

5. Procédé selon la revendication précédente, dans lequel ladite pression est supérieure à 4000 bar.

6. Procédé selon l'une quelconque des revendications précédentes, dans lequel le support poreux est en un matériau fritté, présente une porosité ouverte supérieure à 15% et inférieure à 50%, et a la forme d'une dent.

7. Procédé selon l'une quelconque des revendications précédentes, dans lequel, préalablement à l'infiltration, on crée un vide dans le support.

8. Procédé selon l'une quelconque des revendications précédentes, dans lequel on poursuit l'infiltration de résine à l'état liquide, le cas échéant sous pression, pendant le durcissement de la résine à l'état liquide déjà infiltrée et on contrôle le durcissement de ladite résine à l'état liquide déjà infiltrée de manière qu'il s'effectue depuis l'intérieur du support vers sa périphérie.

9. Procédé selon la revendication précédente, dans lequel, pour contrôler ledit durcissement, on agit sur un ou plusieurs des paramètres suivants :
- la concentration d'accélérateur ou de catalyseur dans la résine à l'état liquide ;
- la température et/ou la durée de maintien à cette température ;
- la nature chimique de la résine.

10. Procédé selon l'une quelconque des revendications précédentes, dans lequel la totalité de la résine à l'état liquide imprégnant le support est durcie avant retour à la pression atmosphérique.

11. Procédé selon l'une quelconque des revendications précédentes, dans lequel la résine à l'état liquide est chemopolymérisable, thermopolymérisable ou thermoplastique.

12. Procédé de fabrication d'une prothèse dentaire comprenant une opération d'usinage d'un bloc composite fabriqué suivant un procédé conforme à l'une quelconque des revendications précédentes.

13. Bloc composite destiné à la fabrication d'une prothèse dentaire, fabriqué suivant un procédé conforme à l'une quelconque des revendications 1 à 11 et présentant une dureté supérieure à 100 Vickers.

14. Bloc composite selon la revendication immédiatement précédente, présentant un module élastique de Young supérieur à 25 GPa, mesuré suivant la norme ISO 10 477 et/ou un module en flexion trois points supérieur à 120 MPa, mesuré suivant la norme ISO 6 872 et/ou une dureté supérieure à 140 Vickers.

## Patentansprüche

1. Verfahren zum Herstellen eines Verbundblocks, der zur Herstellung einer Zahnprothese bestimmt ist, wobei das Verfahren die folgenden Schritte umfasst:
a) Infiltration eines Trägers aus einem porösen Keramik-material mit einem flüssigen Harz;
b) Aushärten des flüssigen Harzes zum Imprägnieren des Trägers;
**dadurch gekennzeichnet, dass** in Schritt b) das flüssige Harz einem Druck von mehr als 300 bar ausgesetzt wird und dadurch, dass man in den Träger ein Volumen von flüssigem Harz von mehr als wenigstens 2% des Volumens der offenen Poren des Trägers eindringen und aushärten lässt, wobei die Volumina bei einer Temperatur von 20°C und einem Druck von 1 bar gemessen sind.

2. Verfahren nach dem vorhergehenden Anspruch, wobei das Volumen des flüssigen Harzes mehr als wenigstens 10% des Volumens der offenen Poren ausmacht.

3. Verfahren nach dem vorhergehenden Anspruch, wobei das Volumen des flüssigen Harzes mehr als wenigstens 15% des Volumens der offenen Poren ausmacht.

4. Verfahren nach einem der vorhergehenden Ansprüche, wobei der Druck mehr als 2000 bar beträgt.

5. Verfahren nach dem vorhergehenden Anspruch, wobei der Druck mehr als 4000 bar beträgt.

6. Verfahren nach einem der vorhergehenden Ansprüche, wobei der poröse Träger ein gesintertes Material ist und eine offene Porösität von mehr als 15% und weniger als 50% hat und die Form eines Zahnes hat.

7. Verfahren nach einem der vorhergehenden Ansprüche, wobei vor der Infiltration ein Hohlraum in dem Träger geschaffen wird.

8. Verfahren nach einem der vorhergehenden Ansprüche, wobei man die Infiltration des flüssigen Kunstharzes, gegebenenfalls unter Druck, während des Aushärtens von bereits infiltriertem flüssigem Harz vornimmt und man das Aushärten des flüssigen, bereits infiltrierten Harzes derart steuert, dass es ausgehend vom Inneren des Trägers in Richtung seines Äußeren fortschreitet.

9. Verfahren nach dem vorhergehenden Anspruch, wobei zur Steuerung des Aushärtens mit einem oder mehreren der folgenden Parameter gearbeitet wird:
- der Konzentration eines Beschleunigers oder Katalysators in dem flüssigen Harz;
- der Temperatur und/oder der Haltedauer bei dieser Temperatur;
- der chemischen Natur des Harzes.

10. Verfahren nach einem der vorhergehenden Ansprüche, wobei das gesamte flüssige Harz, welches den Träger imprägniert, vor der Rückkehr zum Atmosphärendruck ausgehärtet wird.

11. Verfahren nach einem der vorhergehenden Ansprüche, wobei das flüssige Harz chemopolymerisierbar, thermopolymerisierbar oder thermoplastisch ist.

12. Verfahren zur Herstellung einer Zahnprothese umfassend einen Vorgang des Bearbeitens eines Verbundblocks, der hergestellt wurde gemäß einem Verfahren nach einem der vorhergehenden Ansprüche.

13. Verbundblock der zur Herstellung einer Zahnprothese vorgesehen ist, hergestellt nach einem Verfahren gemäß einem der Ansprüche 1 bis 11, und der eine Härte von mehr als 100 Vickers hat.

14. Verbundblock nach dem unmittelbar vorhergehenden Anspruch mit einem Young'schen Elastizitätsmodul von mehr als 25 GPa, gemessen nach der Norm ISO 10 477, und/oder einem Dreipunkt-Biegemodul von mehr als 120 MPa, gemessen nach der Norm ISO 6 872, und/oder einer Härte von mehr als 140 Vickers.

## Claims

1. A method of producing a composite block intended for the production of a dental prosthesis, said method comprising the following steps:
a) infiltrating a support made in a ceramic material, with a liquid resin;
b) curing the liquid resin impregnating the support;
**characterized in that** in step b), the liquid resin is subjected to a pressure of more than 300 bar, and **in that** a volume of liquid resin that is greater than the volume of the open pores of the support by at least 2% is caused to penetrate into the support and to cure therein, said volumes being measured at a temperature of 20°C and at a pressure of 1 bar.

2. A method according to the preceding claim, wherein said volume of liquid resin is greater than said open pore volume by at least 10%.

3. A method according to the preceding claim, wherein said volume of liquid resin is greater than said open pore volume by at least 15%.

4. A method according to any one of the preceding claims, wherein said pressure is greater than 2000 bar.

5. A method according to the preceding claim, wherein said pressure is greater than 4000 bar.

6. A method according to any one of the preceding claims, wherein the porous support is a sintered material, presents an open porosity higher than 15% and less than 50%, and has the shape of a tooth.

7. A method according to any one of the three immediately preceding claims, wherein, prior to infiltration, a vacuum is created in the support.

8. A method according to any preceding claim, wherein infiltration of liquid resin, if necessary under pressure, is continued during curing of the liquid resin that has already been infiltrated, and curing of said liquid resin that has already been infiltrated is controlled such that it is carried out from the interior of the support towards its periphery.

9. A method according to the preceding claim, wherein, in order to control said curing, one or more of the following parameters is operated upon:
• the concentration of accelerator or catalyst in the liquid resin;
• the temperature and/or duration over which the temperature is maintained;
• the chemical nature of the resin.

10. A method according to any one of the preceding claims, wherein all of the liquid resin impregnating the support is cured before returning to atmospheric pressure.

11. A method according to any preceding claim, wherein the liquid resin is chemopolymerizable, thermopolymerizable or thermoplastic.

12. A method of producing a dental prosthesis, comprising an operation for machining a composite block produced using a method in accordance with any preceding claim.

13. A composite block intended for the production of a dental prosthesis, produced using a method in accordance with any one of claims 1 to 11 and having hardness of more than 100 Vickers.

14. A composite block according to the immediately preceding claim, having a Young's modulus of more than 25 GPa, measured in accordance with International standard ISO 10 477, and/or a three-point bending modulus of more than 120 MPa, measured in accordance with ISO 6 872, and/or hardness of more than 140 Vickers
